# EUROPÄISCHE PATENTSCHRIFT

(11) **EP 0 579 014 B1**
(45) Veröffentlichungstag und Bekanntmachung des Hinweises auf die Patenterteilung: **18.10.1995**
(21) Anmeldenummer: 93110174.5
(22) Anmeldetag: 25.06.1993
(51) Int. Cl.: C09K 3/18, E01H 10/00

(54) **Verfahren zum Schmelzen von Schnee und/oder Eis mit einem Alkalimetallcarboxylat**
Process for melting snow and/or ice with an alkali metal carboxylate
Procédé pour fondre la neige et/ou la glace à l'aide d'un carboxylate alcalin

(30) Priorität: 02.07.1992 DE 4221661
(43) Veröffentlichungstag der Anmeldung: 19.01.1994
(73) Patentinhaber: HOECHST AKTIENGESELLSCHAFT, 65926 Frankfurt am Main (DE)
(72) Erfinder: Pöllmann, Klaus, Dr., D-84489 Burghausen (DE); Stankowiak, Achim, Dr., D-60529 Frankfurt am Main (DE); Kapfinger, Josef, D-84326 Falkenberg (DE)

(56) Entgegenhaltungen:
- WO-A-88/05456
- GB-A- 1 111 936
- US-A- 4 400 285
- US-A- 4 425 251
- US-A- 4 488 978

## Beschreibung

Die Erfindung betrifft ein Verfahren zum Schmelzen von Schnee und/oder Eis auf Verkehrsflächen durch Aufbringen eines speziellen Alkalimetallcarboxylats.

Schnee und/oder Eis auf Straßen, Radfahrwegen, Gehwegen, Brücken, Sportplätzen, Flugplätzen und dergleichen (im folgenden Verkehrsflächen genannt) führen zu einer wesentlichen Beeinträchtigung des Verkehrsablaufs und der Verkehrssicherheit. Es ist deshalb schon seit langem bekannt, auf solchen Flächen wasserlösliche Salze aufzubringen, wobei Eis und Schnee schmilzt (auftaut) und eine wäßrige Lösung des Salzes mit entsprechend erniedrigtem Gefrierpunkt gebildet wird.

Wenn Salze als Enteisungsmittel eingesetzt werden, sollten vor allem die folgenden Forderungen erfüllt sein: Das Salz sollte das Material, aus dem die erwähnten Flächen aufgebaut sind, beispielsweise Beton, nicht beschädigen oder gar zersetzen. Wesentlich ist ferner, daS eine korrodierende Wirkung auch auf Metalle ausgeschlossen ist. Das Salz sollte für Mensch und Tier unbedenklich und biologisch gut abbaubar sein. Das eingesetzte Salz sollte eine schnelle und möglichst weitgehende Auftauung bewirken. Von der wirtschaftlichen Seite her ist es schließlich notwendig, daß eine nur geringe Menge an Enteisungsmittel erforderlich ist, daS es wenig kostet und daß es gut lagerfähig und gut handhabbar ist.

Im Hinblick auf die erwähnten Forderungen werden im Stand der Technik vor allem Alkalimetall- und Erdalkalimetallsalze von organischen Säuren als vorteilhafte Enteisungsmittel genannt. So werden in der US-Patentschrift 4,855,071 Alkalimetall- und/oder Erdalkalimetallcarboxylate mit 1 bis 4 C-Atomen, hergestellt nach einem bestimmten Verfahren, als Enteisungsmittel beschrieben, wobei ein im wesentlichen wasserfreies Calcium/Magnesiumacetat besonders empfohlen wird. In der europäischen Patentanmeldung 0 483 721 A1 wird ein flüssiges Enteisungsmittel beschrieben, das im wesentlichen aus Wasser, einem Alkalimetall- und/oder Erdalkalimetallacetat und speziellen Korrosionsinhibitoren besteht.

Die bekannten Enteisungsmittel auf der Basis von Alkalimetall- und/oder Erdalkalimetallcarboxylaten erfüllen zwar die meisten der obengenannten Forderungen, sie lassen jedoch insbesondere in folgender Hinsicht zu wünschen übrig: Die Wirkung eines Salzes als Enteisungsmittel beruht, wie eingangs bereits erwähnt, auf der Gefrierpunktserniedrigung von Wasser durch das Salz. Ein weiterer Vorgang, der dabei auftritt, ist das Energie benötigende Auftauen (Schmelzen) des Eises und/oder Schnees, was zu einer, wenn auch kurzfristigen, starken Abkühlung (Kälteschock) der unmittelbaren Umgebung führt, da dieser die erforderliche Energie (Schmelzwärme) entnommen wird. Daraus resultiert nicht nur eine Verzögerung des Auftauvorgangs, sondern auch eine mehr oder weniger starke Schädigung des Verkehrsflächenbelags. Das in der obersten Schicht, zum Beispiel eines Betonbelags, befindliche Wasser erfährt nämlich durch den erwähnten Kälteschock eine plötzliche Eisbildung und damit Volumenvergrößerung, die zum Aufreißen der jeweils obersten Schicht des Betons führen kann. Die Wirkung der bisher als Enteisungsmittel beschriebenen Alkalimetall- und Erdalkalimetallcarboxylate beruht also nur auf der gefrierpunktserniedrigenden Wirkung dieser Salze bei ihrem Auflösen in Wasser.

Die Aufgabe der Erfindung liegt demnach darin, aus der Vielzahl der an sich vorteilhaften Enteisungsmittel in Form von Alkalimetall- und/oder Erdalkalimetallcarboxylaten ein solches vorzuschlagen, das eine hohe Wirkung bezüglich Gefrierpunktserniedrigung aufweist und beim Vorgang des Auftauens (Schmelzens) von Eis und Schnee in einer exothermen Reaktion Wärme abgibt, wodurch die Schmelzwärme von Eis und Schnee mehr oder weniger ausgeglichen und damit der erwähnte Kälteschock vermindert oder sogar ganz ausgeschaltet wird. Dieses Salz sollte ferner insbesondere ökologisch und physiologisch unbedenklich sein, keine korrodierende Wirkung auf Metalle und den Belag der Verkehrsflächen ausüben, biologisch gut abbaubar sein und gut handhabbar und lagerfähig sein. Ein solches Salz wäre vor allem in all den Fällen erwünscht, in denen es auf ein schnelles Auftauen von Eis und/oder Schnee und gleichzeitig auf eine, wenn überhaupt, nur geringe Abkühlung (geringen Kälteschock) der Umgebung ankommt.

Es wurde überraschenderweise festgestellt, daß ein bestimmtes Alkalimetallcarboxylat, und zwar ein spezielles Natriumsalz der Essigsäure, all die geforderten Eigenschaften bei der Anwendung als Enteisungsmittel aufweist.

Das erfindungsgemäße Verfahren zum Schmelzen von Schnee und/oder Eis auf Verkehrsflächen ist dadurch gekennzeichnet, daS auf den mit Schnee und/oder Eis bedeckten Verkehrsflächen ein Natriumacetat in einer wirksamen Menge aufgebracht wird, das weniger als 10 Gew.-% Wasser enthält und in Form von Partikeln mit einer glatten Oberfläche und einem Durchmesser von 0,3 bis 10 mm vorliegt.

Beim erfindungsgemäßen Verfahren wird also ein Natriumacetat eingesetzt, das durch eine Kombination von ganz bestimmten Merkmalen gekennzeichnet ist. Es ist ein bis zu einem sehr geringen Wassergehalt getrocknetes Natriumacetat. Es soll weniger als 10 Gew.-% Wasser, vorzugsweise weniger als 5 Gew.-% und insbesondere weniger als 0,5 Gew.-% Wasser, besitzen (Gewichtsprozente bezogen auf das Gewicht des einzusetzenden Natriumacetats). Unter Berücksichtigung der Wirtschaftlichkeit bei der Herstellung und Lagerung von trockenem (wasserfreiem) Natriumacetat wird man ein solches Natriumacetat einsetzen, das nur noch etwa 0,05 bis 10 Gew.-% Wasser, vorzugsweise 0,05 bis 5 Gew.-% und insbesondere etwa 0,05 bis 0,5 Gew.-% Wasser, enthält (Gewichtsprozente bezogen auf das einzusetzende Natriumacetat). Das erfindungsgemäß vorgeschlagene Natriumacetat soll ferner eine ausgewählte Morphologie aufweisen. Es soll in Form von Partikeln (Granulat) vorliegen, vorzugsweise in Form von Körnern, Kügelchen oder Prills, insbesondere in Form von Kügelchen oder Prills, wobei die Partikeln einen Durchmesser von etwa 0,3 bis 10 mm, vorzugsweise von 0,5 bis 5 mm und insbesondere von etwa 1 bis 3 mm, besitzen. Die Oberfläche der Partikeln soll im wesentlichen glatt ausgebildet sein, das heißt nicht rauh oder porös und dergleichen.

Das erfindungsgemäß einzusetzende Natriumacetat wird hergestellt, indem Essigsäure und wäßrige Natronlauge im wesentlichen stöchiometrisch vermischt werden und die wäßrige Natriumacetatlösung in einem Sprühgranulierer zu den erfindungsgemäß einzusetzenden Partikeln getrocknet wird. Die Essigsäure wird vorzugsweise in Form einer 90 bis 99,9gew.%igen wäßrigen Lösung eingesetzt und das Natriumhydroxid in Form einer 30 bis 50gew.%igen wäßrigen Lösung (wäßrige Natronlauge). Die Essigsäure und das Natriumhydroxid werden vorzugsweise in einer solchen Menge eingesetzt, daß die resultierende Natriumacetatlösung einen pH-Wert von 7 bis 11 aufweist. Das Vermischen von wäßriger Essigsäure und wäßriger Natronlauge und gegebenenfalls zusätzlichem Wasser erfolgt vorzugsweise bei einer Temperatur von 40 bis 90 °C, wobei die Neutralisationswärme durch Kühlen abgeführt wird. Die erhaltene wäßrige Natriumacetatlösung enthält in der Regel 30 bis 65 Gew.-% Natriumacetat, vorzugsweise 40 bis 60 Gew.-%, Gewichtsprozente bezogen auf das Gewicht der wäßrigen Lösung. Es liegt also eine echte (ungesättigte, niedrigviskose, klare) Lösung von Natriumacetat in Wasser vor (bezogen auf die angegebene Temperatur von 40 bis 90 °C). Aus dieser speziellen Natriumacetatlösung werden in einem üblichen Sprühgranulierer (Sprühtrockner) die erfindungsgemäß einzusetzenden Partikeln gewonnen. Dazu wird die wäßrige Natriumacetatlösung in einem Granulierer mit einer oder mehreren Düsen versprüht und mit Hilfe von Luft oder Stickstoff mit einer Temperatur von vorzugsweise 100 bis 130 °C getrocknet. Es hat sich als vorteilhaft erwiesen, wenn zu Beginn des Versprühens der beschriebenen Natriumacetatlösung im Sprühtrockner bereits Natriumacetatpartikeln im fluidisiertem Zustand vorhanden sind, auf die dann die Natriumacetatlösung aufgesprüht wird. Das im Granulierer nach unten fallende und ausgetragene Partikelgut (Granulat) in Form von vorzugsweise Kügelchen oder Prills hat die erfindungsgemäß erforderliche glatte Oberfläche und den erfindungsgemäß erforderlichen Trocknungsgrad. Durch Abtrennen (Sieben) der kleinen und großen Partikeln im Partikelgut wird auch die erfindungsgemäß erforderliche Partikelgröße erhalten.

Das erfindungsgemäß vorgeschlagene Natriumacetat mit kleiner Oberfläche stellt aufgrund seines geringen Wassergehalts und seiner speziellen Morphologie ein besonders vorteilhaftes Enteisungsmittel dar. Es erfüllt alle eingangs genannten Forderungen wie ökologische und physiologische Unbedenklichkeit, keine korrodierende Wirkung auf Metalle und Verkehrsflächenbeläge, gute biologische Abbaubarkeit und gute Handhabbarkeit und Lagerfähigkeit (das befürchtete Verkleben infolge von Hygroskopie tritt nicht auf). Das erfindungsgemäß vorgeschlagene Natriumacetat erfüllt vor allem auch die Forderungen nach schneller Auftauwirkung und nach einer, wenn überhaupt, nur geringen Abkühlung der Umgebung. Es bewirkt nämlich nicht nur eine hohe Gefrierpunktserniedrigung, sondern auch ein Freiwerden von Lösungswärme, wodurch das Schmelzen von Eis und Schnee beschleunigt wird und ohne Auftreten des erwähnten Kälteschocks abläuft. Zudem wird aufgrund dieser besonderen Eigenschaften auch ein hoher präventiver Effekt erreicht. Mit dem erfindungsgemäß vorgeschlagenen Natriumacetat steht also ein besonders vorteilhaftes Enteisungsmittel zur Verfügung.

Beim erfindungsgemäßen Verfahren zum Schmelzen von Schnee und/oder Eis auf Verkehrsflächen wird eine wirksame Menge des beschriebenen festen Enteisungsmittels auf der zu behandelnden Verkehrsfläche aufgebracht, das heißt eine solche Menge, daß das angestrebte Schmelzen oder Auftauen von Eis und/oder Schnee erreicht wird. Diese Menge hängt vor allem von der Außentemperatur und der vorhandenen Eis- und/oder Schneemenge ab und liegt im allgemeinen bei 10 bis 400 g pro m² eis- und/oder schneebedeckter Fläche. Das Aufbringen des festen Enteisungsmittels kann mit den üblichen Streufahrzeugen durchgeführt werden.

Die Erfindung wird nun an Beispielen und Vergleichsbeispielen noch näher erläutert.

### Beispiel 1

In einem Kühlraum wurde bei einer Temperatur von -5 °C eine 2 mm dicke Eisschicht erzeugt. Auf die Eisschicht wurden 100 g/m² Natriumacetat gleichmäßig aufgebracht, das die Form von Prills mit einer glatten Oberfläche, einem Durchmesser von 0,8 bis 2 mm und einem Wassergehalt von 9 Gew.-% hatte.

Nach einer Einwirkungszeit von 30 Minuten bei den angegebenen -5 °C wurde das noch vorhandene, nicht geschmolzene Eis gewogen und das Gewicht dieser Eismenge vom Gewicht der ursprünglichen Eismenge abgezogen und so der Anteil an geschmolzenem Eis (gebildetem Wasser) in Gewichtsprozenten festgestellt, bezogen auf die ursprüngliche Eismenge.

### Ergebnis:

Nach einer Einwirkungszeit von 30 Minuten bei -5 °C waren 26 Gew.-% Eis geschmolzen.

### Beispiel 2

Es wurde wie im Beispiel 1 vorgegangen, mit dem Unterschied, daß ein Natriumacetat aufgebracht wurde, das die Form von Prills mit einer glatten Oberfläche, einem Durchmesser von 0,8 bis 2 mm und einem Wassergehalt von 4,5 Gew.-% hatte.

### Ergebnis:

Nach einer Einwirkungszeit von 30 Minuten bei -5 °C waren 30 Gew.-% Eis geschmolzen.

### Beispiel 3

Es wurde wie im Beispiel 1 vorgegangen, mit dem Unterschied, daß ein Natriumacetat aufgebracht wurde, das die Form von Prills mit einer glatten Oberfläche, einem Durchmesser von 0,8 bis 2 mm und einem Wassergehalt von 0,1 Gew.-% hatte.

### Ergebnis:

Nach einer Einwirkungszeit von 30 Minuten bei -5 °C waren 35 Gew.-% Eis geschmolzen.

### Vergleichsbeispiel 1

Es wurde wie im Beispiel 1 vorgegangen, mit dem Unterschied, daß ein Natriumacetat aufgebracht wurde, das die Form von Prills mit einer glatten Oberfläche, einem Durchmesser von 0,8 bis 2 mm und einem Wassergehalt von 18 Gew.-% hatte.

### Ergebnis:

Nach einer Einwirkungszeit von 30 Minuten bei -5 °C waren 20 Gew.-% Eis geschmolzen.

### Vergleichsbeispiel 2

Es wurde wie im Beispiel 1 vorgegangen, mit dem Unterschied, daß ein Calciummagnesiumacetat aufgebracht wurde, das die Form von Prills mit einer glatten Oberfläche, einem Durchmesser von 0,8 bis 2 mm und einem Wassergehalt von 4,8 Gew.-% hatte.

### Ergebnis:

Nach einer Einwirkungszeit von 30 Minuten bei -5 °C waren 6 Gew.-% Eis geschmolzen.

## Patentansprüche

1. Verfahren zum Schmelzen von Schnee und/oder Eis auf Verkehrsflächen, dadurch gekennzeichnet, daß auf den mit Schnee und/oder Eis bedeckten Verkehrsflächen ein Natriumacetat in einer wirksamen Menge aufgebracht wird, das weniger als 10 Gew.-% Wasser enthält und die Form von Partikeln mit einer glatten Oberfläche und einem Durchmesser von 0,3 bis 10 mm hat.

2. Verfahren nach Anspruch 1, dadurch gekennzeichnet, daß ein Natriumacetat aufgebracht wird, das die Form von Kügelchen oder Prills mit einer glatten Oberfläche und einem Durchmesser von 0,3 bis 10 mm hat.

3. Verfahren nach Anspruch 1, dadurch gekennzeichnet, daß ein Natriumacetat aufgebracht wird, das weniger als 5 Gew.-% Wasser enthält und die Form von Kügelchen oder Prills mit einer glatten Oberfläche und einem Durchmesser von 0,5 bis 5 mm hat.

4. Verfahren nach Anspruch 1, dadurch gekennzeichnet, daß ein Natriumacetat aufgebracht wird, das weniger als 0,5 Gew.-% Wasser enthält und die Form von Kügelchen oder Prills mit einer glatten Oberfläche und einem Durchmesser von 1 bis 3 mm hat.

5. Verfahren nach einem oder mehreren der Ansprüche 1 bis 4, dadurch gekennzeichnet, daß ein Natriumacetat aufgebracht wird, hergestellt durch Vermischen von Essigsäure und wäßriger Natronlauge in einer im wesentlichen stöchiometrischen Menge und Trocknen der erhaltenen wäßrigen Natriumacetatlösung in einem Sprühgranulierer zu Natriumacetatpartikeln mit den in den Ansprüchen 1 bis 4 angegebenen Merkmalen.

6. Verfahren nach einem oder mehreren der Ansprüche 1 bis 4, dadurch gekennzeichnet, daß ein Natriumacetat aufgebracht wird, hergestellt durch Vermischen von 90 bis 99,9gew.%iger wäßriger Essigsäure und 30 bis 50gew.%iger wäßriger Natronlauge und gegebenenfalls zusätzlichem Wasser bei einer Temperatur von 40 bis 90 °C in einer jeweils solchen Menge, daß die erhaltene wäßrige Natriumacetatlösung einen pH-Wert von 7 bis 11 hat und 40 bis 60 Gew.-% Natriumacetat enthält, und Trocknen dieser Natriumacetatlosung in einem Sprühgranulierer mit Hilfe von Luft oder Stickstoff mit einer Temperatur von 100 bis 130 °C zu Natriumacetatpartikeln mit den in den Ansprüchen 1 bis 4 angegebenen Merkmalen.

7. Verfahren nach einem oder mehreren der Ansprüche 1 bis 6, dadurch gekennzeichnet, daß das Natriumacetat in einer Menge von 10 bis 400 g pro m² auf eis- und/oder schneebedeckter Fläche aufgebracht wird.

## Claims

1. A process for melting snow and/or ice on traffic surfaces, which comprises applying to the traffic surfaces covered with snow and/or ice an effective amount of a sodium acetate which contains less than 10% by weight of water and is in the form of particles having a smooth surface and a diameter of 0.3 to 10 mm.

2. The process as claimed in claim 1, wherein a sodium acetate which has the form of beads or prills having a smooth surface and a diameter of 0.3 to 10 mm is applied.

3. The process as claimed in claim 1, wherein a sodium acetate which contains less than 5% by weight of water and has the form of beads or prills having a smooth surface and a diameter of 0.5 to 5 mm is applied.

4. The process as claimed in claim 1, wherein a sodium acetate which contains less than 0.5% by weight of water and has the form of beads or prills having a smooth surface and a diameter of 1 to 3 mm is applied.

5. The process as claimed in one or more of claims 1 to 4, wherein a sodium acetate prepared by mixing acetic acid and an aqueous sodium hydroxide solution in an essentially stoichiometric amount and drying the resulting aqueous sodium acetate solution in a spray granulator to give sodium acetate particles having the features described in claims 1 to 4 is applied.

6. The process as claimed in one or more of claims 1 to 4, wherein a sodium acetate prepared by mixing 90 to 99.9% strength by weight aqueous acetic acid and 30 to 50% strength by weight aqueous sodium hydroxide solution and, if appropriate, additional water at a temperature of 40 to 90°C in each case in an amount such that the resulting aqueous sodium acetate solution has a pH of 7 to 11 and contains 40 to 60% by weight of sodium acetate, and drying this sodium acetate solution in a spray granulator with the aid of air or nitrogen at a temperature of 100 to 130°C to give sodium acetate particles having the features described in claims 1 to 4 is applied.

7. The process as claimed in one or more of claims 1 to 6, wherein the sodium acetate is applied in an amount of 10 to 400 g per m² to an ice- and/or snow-covered surface.

## Revendications

1. Procédé pour faire fondre de la neige et/ou de la glace recouvrant des aires de circulation, caractérisé en ce que l'on dépose sur les aires de circulation recouvertes de neige et/ou de glace un acétate de sodium dans une quantité efficace, ce sel contenant moins de 10 % en poids d'eau et se présentant sous la forme de particules ayant une surface lisse et un diamètre compris entre 0,3 et 10 mm.

2. Procédé selon la revendication 1, caractérisé en ce que l'on dépose un acétate de sodium, qui a la forme de petites billes ou de granulés ayant une surface lisse et un diamètre compris entre 0,3 et 10 mm.

3. Procédé selon la revendication 1, caractérisé en ce que l'on dépose un acétate de sodium, qui contient moins de 5 % en poids d'eau et qui possède la forme de petites billes ou de granulés ayant une surface lisse et un diamètre compris entre 0,5 et 5 mm.

4. Procédé selon la revendication 1, caractérisé en ce que l'on dépose un acétate de sodium, qui contient moins de 0,5 % en poids d'eau et qui possède la forme de petites billes ou de granulés ayant une surface lisse et un diamètre compris entre 1 et 3 mm.

5. Procédé selon l'une ou plusieurs des revendications 1 à 4, caractérisé en ce que l'on dépose un acétate de sodium préparé en mélangeant de l'acide acétique et une lessive de soude aqueuse dans une quantité essentiellement stoechiométrique et en séchant la solution aqueuse d'acétate de sodium obtenue dans un granulateur par pulvérisation pour conduire à des particules d'acétate de sodium ayant les caractéristiques indiquées dans les revendications 1 à 4.

6. Procédé selon l'une ou plusieurs des revendications 1 à 4, caractérisé en ce que l'on dépose un acétate de sodium préparé en mélangeant de l'acide acétique aqueux de 90 à 99,9 % en poids et une lessive de soude aqueuse de 30 à 50 % en poids et éventuellement de l'eau supplémentaire à une température comprise entre 40 et 90°C dans une quantité telle à chaque fois que la solution aqueuse d'acétate de sodium obtenue ait un pH compris entre 7 et 11 et contienne de 40 à 60 % en poids d'acétate de sodium, et en séchant cette solution d'acétate de sodium dans un granulateur par pulvérisation au moyen d'air ou d'azote à une température comprise entre 100 à 130°C pour conduire à des particules d'acétate de sodium ayant les caractéristiques indiquées dans les revendications 1 à 4.

7. Procédé selon l'une ou plusieurs des revendications 1 à 6, caractérisé en ce que l'acétate de sodium est déposé dans une quantité comprise entre 10 et 400 g/m² de surface recouverte par la glace et/ou la neige.
